Europäisches Patentamt

European Patent Office

Office européen des brevets

(19)

(11) Numéro de publication : **0 061 193**
**B1**

(12) FASCICULE DE BREVET EUROPÉEN

(45) Date de publication du fascicule du brevet :
18.09.85

(51) Int. Cl.⁴ : **C 01 B 17/90, C 01 B 17/92,**
**C 01 C 1/24, B 01 D 11/04**

(21) Numéro de dépôt : 82102387.6

(22) Date de dépôt : 23.03.82

(54) Procédé de récupération d'acide sulfurique.

(30) Priorité : 24.03.81 CA 373743

(43) Date de publication de la demande :
29.09.82 Bulletin 82/39

(45) Mention de la délivrance du brevet :
18.09.85 Bulletin 85/38

(84) Etats contractants désignés :
DE FR GB IT

(56) Documents cités :
FR-A- 1 559 894
FR-A- 2 240 183
GB-A- 860 370
Patent Abstracts of Japan Vol. 4, No. 34, 22 mars 1980
page 167C3
Soviet Inventions Illustrated semaine B 18, 14 juin
1979 section M28

(73) Titulaire : GOUVERNEMENT DU QUEBEC
200, Chemin Ste-Foy
Québec (CA)

(72) Inventeur : Kougioumoutzakis, Demetre
3425, rue Sarnia
Sainte-Foy Québec G1X 2K5 (CA)

(74) Mandataire : Casalonga, Axel et al
BUREAU D.A. CASALONGA OFFICE JOSSE & PETIT
Baaderstrasse 12-14
D-8000 München 5 (DE)

**Description**

L'invention concerne un procédé de récupération de l'acide sulfurique. Plus précisément, la présente invention traite d'un procédé d'extraction liquide-liquide de l'acide sulfurique de solutions industrielles usées et de sa transformation en un produit de valeur marchande élevée. En particulier, l'invention vise à récupérer l'acide sulfurique des acides usés de l'industrie des pigments de $TiO_2$.

La plus grande partie de l'acide sulfurique produit dans le monde est utilisée comme réactif dans divers procédés industriels. Les principaux utilisateurs de l'acide sulfurique sont l'industrie chimique, l'industrie pétrolière, les industries minières, métallurgiques et sidérurgiques. Deux grands consommateurs d'acide sulfurique dans l'industrie chimique sont l'industrie des engrais et l'industrie des pigments. A la fin de plusieurs procédés, on retrouve l'acide sulfurique soit comme acide usé, contaminé par d'autres substances (impuretés organiques, sulfates de métaux, etc.), soit comme sous-produit ($CaSO_4$).

La récupération de l'acide sulfurique des procédés de telles industries constitue un problème qui n'a pas trouvé de solution convenable.

Actuellement, différentes méthodes sont utilisées pour la récupération de l'acide sulfurique provenant des acides usés de tels procédés, à savoir :

1) la régénération de l'acide sulfurique usé par décomposition à haute température ($\sim 1\,000\,°C$) en $SO_2$, réoxydation en $SO_3$ et absorption dans l'eau. L'acide régénéré contient 93-95 % $H_2SO_4$ (Sander, U. and Daradimas, G., Chem. Ing. Propr., Sept. 1978 ; Regenerating Spent Acid ; p. 57-67).

2) Le procédé Simonson-Mantius (Burke, J.F., and E. Mantius, Chem. Eng. Progr. 43,237 (1947) ; Duecker, W.W., and J.R. West, eds., « The Manufacture of Sulfuric Acid », p. 238, Reinhold, New York (1959) qui récupère l'acide sulfurique usé par évaporation sous vide.

3) Le procédé Chemico (G. M. Smith and E. Mantius, Chem. Eng. Progr. pp. 78-83, (Septembre 1978)) qui concentre l'acide sulfurique usé en utilisant les gaz surchauffés.

4) L'extraction d'acide sulfurique de solutions usées provenant notamment de la production du cuivre à l'aide d'un mélange d'une amine tertiaire, d'un alkylphénol et de kérosène (SU-A-611 877 « Soviet Inventions Illustrated », semaine B18, 14 juin 1979, section M28).

5) Le procédé du brevet GB-A-860 370 de purification de l'acide sulfurique dilué obtenu par dilution avec de l'eau d'une boue acide formée dans le raffinage à l'acide sulfurique de fractions de pétrole, qui consiste à extraire l'acide dilué avec un hydrocarbure liquide et à purifier ensuite l'acide extrait avec un gaz inerte.

Les désavantages communs de ces procédés de récupération sont la grande quantité d'énergie consommée et la corrosion qui est causée par la concentration élevée de l'acide régénéré.

Dans le cas où la récupération de l'acide sulfurique est non rentable à cause de la basse concentration en $H_2SO_4$ de l'acide usé ou à cause du pourcentage élevé des impuretés, on utilise le CaO comme neutralisant. Le $CaSO_4$ obtenu par neutralisation contient souvent des impuretés qui le rendent inacceptable comme gypse. Dans ce cas le $CaSO_4$ pose le problème de l'élimination.

Pour la grande majorité des industries qui utilisent l'acide sulfurique dans leurs procédés, la mise au rebut de l'acide usé constitue un sérieux problème à cause des réglementations sur la conservation de l'environnement. A titre d'exemple, un procédé majeur de l'industrie des pigments de titane utilise l'acide sulfurique pour la mise en solution du $TiO_2$. A la fin du procédé on rejette une solution qui contient principalement 250-350 g/l $H_2SO_4$ et typiquement $\sim 7$ g/l $TiO_2$, $\sim 3$ g/l $VOSO_4$ et 22 g/l $Al_2(SO_4)_3$. Cette solution est déversée dans un cours d'eau, ce qui constitue une source de pollution.

Un autre exemple est le procédé de lixiviation par l'acide sulfurique du sulfure de zinc calciné qui conduit à la récupération électrolytique du zinc. La solution de rebut de ce procédé contient environ 250 g/l $H_2SO_4$, 13 g/l Zn et 10 g/l Mn. Ces exemples ne constituent pas une liste exhaustive.

Un objet de l'invention est le développement d'un procédé pratique et économique pour l'extraction de l'acide sulfurique de solutions industrielles usées.

Un autre objet de l'invention consiste en la mise au point d'un procédé fonctionnel et pratique de récupération de l'acide sulfurique des solutions telles que mentionnées ci-haut et de transformation de l'acide récupéré en un produit de valeur marchande élevée.

Selon l'invention, la récupération d'acide sulfurique à partir de liqueurs en contenant s'effectue par une extraction liquide-liquide sélective desdites liqueurs, dans des conditions produisant une phase organique contenant l'acide sulfurique et une phase aqueuse contenant éventuellement des impuretés. L'on traite ensuite la phase organique par $NH_3$ gazeux pour récupérer l'acide sulfurique par filtration sous forme de $(NH_4)_2 SO_4$.

En d'autres termes, la solution contenant l'acide sulfurique est soumise, de préférence à la température ambiante, à un procédé d'extraction par solvants. On utilise de préférence un solvant organique, par exemple composé d'une amine tertiaire, éventuellement d'un modificateur et d'un diluant organique.

Lesdites liqueurs de départ sont par exemple des solutions industrielles usées contenant de l'acide sulfurique, notamment des acides usés de l'industrie des pigments de $TiO_2$.

Les solutions industrielles usées contenant l'acide sulfurique peuvent contenir des ions métalliques, notamment des ions vanadium, fer, titane, aluminium et chrome.

Bien que la nature de l'amine tertiaire puisse varier de façon sensible, il est recommandé que cette dernière soit soluble dans les solvants organiques, aromatiques ou aliphatiques, qu'elle soit pratiquement insoluble en milieu aqueux et qu'elle soit capable d'extraire l'acide sulfurique et de s'en libérer facilement. De préférence, on utilise une amine tertiaire macromoléculaire à trois chaînes aliphatiques, saturés ou non, linéaires ou ramifiées et contenant 8-12 atomes de carbone par chaîne. Comme exemples de telles amines tertiaires on mentionnera les amines Alamine 304, Alamine 308, Alamine 310 et Alamine 336 (marques déposées). Alamine 304 représente la trilaurylamine, Alamine 308 représente la triisooctylamine, Alamine 310 représente la triisodécylamine, et Alamine 336 représente une amine tertiaire saturée à chaîne droite symétrique dont les groupements alkyle comprennent un mélange en $C_8$-$C_{10}$, avec prédominance de la chaîne à 8 atomes de carbone.

Le diluant organique peut être quelconque, mais on préfère utiliser du kérosène, par exemple le Solvesso (marque déposée).

Quant au modificateur, son rôle est de prévenir la formation d'émulsion et de faciliter la séparation des phases. On choisit de préférence l'isodécanol, le nonylphénol et le tributyl phosphate (TBP) préférablement à une concentration d'environ 5 pourcent en volume.

L'acide sulfurique extrait par la phase organique est neutralisé par $NH_3$ gazeux, et il est récupéré par filtration sous forme de $(NH_4)_2SO_4$.

Après neutralisation de l'acide sulfurique par $NH_3$ gazeux, la phase organique peut être recyclée afin d'extraire de nouvelles quantités d'acide sulfurique.

On préfère faire barboter le $NH_3$ dans la phase organique en quantité stœchiométrique pour la neutralisation de l'acide sulfurique présent dans cette phase et la formation de $(NH_4)_2SO_4$ solide qui est récupéré ensuite par filtration. On peut aussi effectuer la neutralisation de l'acide sulfurique en traitant la phase organique avec le gaz $NH_3$, sous pression en vase clos. Cette opération élimine complètement l'acide sulfurique de la phase organique qui est recyclée pour extraire d'autres quantités d'acide sulfurique.

Bien que la durée de l'extraction liquide-liquide ne soit pas critique, elle s'effectue en général pendant une période variant entre 0,1 et 5 minutes.

La récupération de l'acide sulfurique s'effectue normalement à température ambiante.

Un exemple typique d'une liqueur de départ apparaît au Tableau 1 ci-dessous :

Tableau 1

| | |
|---|---|
| $V_2O_5$ | 1,3 g/l |
| $Fe_{tot}$ | 16,4 g/l |
| $TiO_2$ | 1,7 g/l |
| $Al_2O_3$ | 9,4 g/l |
| $Cr_2O_3$ | 0,36 g/l |
| $H_2SO_4$ | 350 g/l |

Un exemple de solvant organique comprend 30 % en volume d'amine tertiaire et 70 % en volume de kérosène modifié.

Selon une autre réalisation de l'invention, la concentration de l'amine dans le diluant peut varier entre 10 et 60 % en volume, et le modificateur peut être utilisé à une concentration d'environ 5 % en volume.

Bien que le pH ne soit pas critique, on recommande que l'extraction liquide-liquide s'effectue à un pH inférieur au pH de précipitation des métaux présents sous forme d'ions dans la solution.

Dans une réalisation préférée de l'invention, la récupération d'acide sulfurique à partir d'acides usés de l'industrie des pigments de $TiO_2$, contenant de l'acide sulfurique et des ions métalliques vanadium, fer, titane, aluminium et chrome, est caractérisée en ce que l'on mélange lesdits acides usés avec un solvant contenant 30 % en volume d'Alamine 308, 65 % en volume de Solvesso et 5 % en volume d'isodécanol, pendant environ 5 minutes à la température ambiante, de façon à produire une séparation en une phase aqueuse contenant pratiquement tous les ions métalliques de la solution de départ, et une phase organique contenant une partie importante de l'acide sulfurique, on fait barboter du $NH_3$ gazeux en quantité stœchiométrique dans la phase organique précipitant ainsi le $(NH_4)_2SO_4$ qui est insoluble dans le solvant et l'on sépare le $(NH_4)_2SO_4$ par filtration.

Le procédé est cyclique, sélectif pour l'extraction du $H_2SO_4$ et ne requiert qu'une quantité d'énergie. Les amines du commerce, Alamine 304, 308, 310 et 336 ont été utilisées, mais d'autres amines tertiaires macromoléculaires, à trois chaînes aliphatiques, saturées ou non, linéaires ou ramifiées et contenant 8-12 atomes de carbone par chaîne peuvent être également utilisées.

L'acide sulfurique usé contenant des ions métalliques est mis en contact avec le solvant, notamment une solution de l'amine en utilisant des appareils connus pour l'extraction liquide-liquide (ampoules à décanter, mélangeurs-décanteurs, colonnes d'extraction, centrifugeuses, etc.). L'acide sulfurique est extrait sélectivement par la solution de l'amine sans que les ions métalliques soient extraits.

Les exemples qui suivent sont donnés à titre purement illustratif sans caractère limitatif. Les pourcent sont, sauf indication contraire, des pourcent en volume.

## Exemple 1

Composition du solvant

| | |
|---|---|
| Alamine 308 | 30 % |
| Solvesso 150 (diluant) | 65 % |
| Isodécanol (modificateur) | 5 % |

1 000 ml de l'acide usé contenant 350 g/l $H_2SO_4$, 1,3 g/l V, 16,4 g/l Fe, 1,7 g/l $TiO_2$, 9,4 g/l $Al_2O_3$ et 0,36 g/l $Cr_2O_3$ ont été mélangés pendant 5 minutes à la température ambiante dans une ampoule à décanter avec 1 000 ml du solvant sus-mentionné, en utilisant un appareil approprié (« Wrist Action Shaker »). La séparation des phases nécessite 5 minutes. Les concentrations d'acide sulfurique après la mise en contact avec le solvant sont 300 g/l dans le raffinat (phase aqueuse après l'extraction) et 50 g/l dans la phase organique. Les concentrations d'ions métalliques dans le raffinat sont les suivantes : 1,3 g/l V, 16,7 g/l Fe, 1,74 g/l $TiO_2$ 9,7 g/l $Al_2O_3$ et 0,37 g/l $Cr_2O_3$, indiquant qu'il n'y a effectivement aucune extraction de ces éléments dans le solvant.

Si un volume de solvant six fois supérieur à celui de l'acide sulfurique usé est utilisé pour effectuer la même expérience que ci-dessus, le raffinat après séparation des phases a une concentration de 90 g/l $H_2SO_4$, le reste de l'acide sulfurique (260 g) étant extrait par le solvant. On a fait barboter du $NH_3$ gazeux en quantité stœchiométrique dans le solvant qui contient l'acide sulfurique et on a précipité le $(NH_4)_2SO_4$ qui est insoluble dans le solvant. Ce dernier a été séparé du solvant par filtration sous vide et après séchage à 105 °C pendant 1 heure, son poids était de 67 g. Le solvant ainsi régénéré a été utilisé pour l'extraction de nouvelles quantités de $H_2SO_4$, à partir de l'acide usé, en suivant le même procédé.

## Exemple 2

Cet exemple démontre que la cinétique de l'extraction de l'acide sulfurique par le solvant est très rapide, ce qui permet de diminuer appréciablement le temps de contact pendant l'extraction.

Composition du solvant : la même qu'à l'exemple 1.

Composition de l'acide usé : la même qu'à l'exemple 1.

| Temps de contact en minutes | Rapport en volume phase org./phase aqueuse | Concentr. $H_2SO_4$ dans le solvant en g/l |
|---|---|---|
| 0,1 | 1/1 | 53 |
| 0,5 | 1/1 | 53 |
| 0,5 | 4/1 | 53 |
| 1,0 | 1/1 | 53 |
| 1,0 | 6/1 | 53 |
| 2,0 | 1/1 | 53 |
| 3,0 | 1/1 | 53 |
| 5,0 | 1/1 | 53 |

Le temps de contact de l'exemple 1 peut être réduit à une minute ou moins, ce qui confère un avantage considérable à ce procédé, en permettant de réduire considérablement les dimensions des appareils d'extraction.

Les exemples qui suivent sont basés sur des essais qui ont été effectués avec une solution fournie par l'industrie des pigments de titane, dont l'analyse figure au Tableau 1. Les amines utilisées, le Solvesso 150, le TBP et le nonylphénol sont des produits de commerce. Les autres réactifs sont des produits de laboratoire de qualité analytique.

Les essais d'extraction et de réextraction ont été faits dans des ampoules à décanter, agitées mécaniquement avec un appareil, « Wrist Action Shaker », de Barrel Corporation. La température était de 22-23 °C. L'acide sulfurique libre dans la phase aqueuse a été dosé par titration avec une solution de soude standard (3 N NaOH). La concentration de l'acide dans le solvant a été calculée par différence en dosant l'acide sulfurique dans la phase aqueuse avant et après l'extraction liquide-liquide.

Les éléments métalliques ont été dosés par absorption atomique ou par spectrographie.

Le Tableau 2 présente l'extraction de l'acide sulfurique par différentes amines. Le tableau 3 présente l'extraction de l'acide sulfurique par les mêmes amines qui contiennent en plus une quantité de modificateur. Le Tableau 4 montre l'influence de la concentration de l'Alamine 308 sur l'extraction de $H_2SO_4$. Le Tableau 5 présente la cinétique de l'extraction par l'Alamine 308 et le Tableau 6 les analyses du $(NH_4)_2SO_4$ obtenu.

(Voir tableaux pages suivantes)

**0 061 193**

Tableau 2

Extraction de $H_2SO_4$ par différentes amines (sans modificateur)
Temps de contact : 5 minutes, rapport en volume phase organique/phase aqueuse = 1

| Ex. N°. | 30 % amine 70 % Solvesso 150 | Temps séparation des phases minutes | Formation d'émulsion | $H_2SO_4$ extrait g/l |
|---|---|---|---|---|
| 3 | Alamine 304 | 45 | oui | 28 |
| 4 | Alamine 308 | 5 | non | 49 |
| 5 | Alamine 310 | 10 | oui | 40,6 |
| 6 | Alamine 336 | 10 | non | 49 |
| 7 | Aliquat 336 (amine quaternaire) | 45 | oui | 23,8 |

Tableau 3

Extraction de $H_2SO_4$ par différentes amines contenant un modificateur.
Temps de contact : 5 minutes, rapport en volume phase organique/phase aqueuse = 1.

| Ex. N°. | 30 % amine 65 % Solvesso 150 5 % nonylphénol | Temps de séparation des phases (minutes) | Formation d'émulsion | $H_2SO_4$ extrait g/l |
|---|---|---|---|---|
| 8 | Alamine 304 | 45 | oui | 32,2 |
| 9 | Alamine 308 | 7 | légère | 54,6 |
| 10 | Alamine 310 | 7 | oui | 43,4 |
| 11 | Alamine 336 | 4 | légère | 49,0 |
| 12 | Aliquat 336 | 5 | oui | 23,8 |
| | 30 % amine 65 % Solvesso 150 5 % TBP | | | |
| 13 | Alamine 304 | 45 | oui | 36,4 |
| 14 | Alamine 308 | 3 | légère | 53,2 |
| 15 | Alamine 310 | 3 | oui | 46,2 |
| 16 | Alamine 336 | 3 | légère | 51,8 |
| 17 | Aliquat 336 | 30 | oui | 22,7 |
| | 30 % amine 65 % Solvesso 150 5 % isodécanol | | | |
| 18 | Alamine 304 | 45 | oui | 33,6 |
| 19 | Alamine 308 | 5 | non | 51,8 |
| 20 | Alamine 310 | 10 | oui | 43,4 |
| 21 | Alamine 336 | 5 | non | 49,0 |
| 22 | Aliquat 336 | 45 | oui | 26,6 |

5

## Tableau 4

Effet de la concentration de l'amine sur l'extraction du $H_2SO_4$, rapport phase organique/phase aqueuse = 1
Temps de contact : instantané

| Ex. N°. | % en volume | | | Temps de séparation des phases (minutes) | g/l $H_2SO_4$ par 10 % Alamine 308 | g/l $H_2SO_4$ total extrait |
|---|---|---|---|---|---|---|
| | Alamine 308 | Solvesso 150 | Isodé-canol | | | |
| 23 | 10 | 85 | 5 | 1 | 21,0 | 21 |
| 24 | 20 | 75 | 5 | 3 | 18,2 | 36,4 |
| 25 | 30 | 65 | 5 | 5 | 19,1 | 57,3 |
| 26 | 40. | 55 | 5 | 13 | 18,0 | 72 |
| 27 | 50 | 45 | 5 | 23 | 17,6 | 88 |
| 28 | 60 | 35 | 5 | 64 | 17,0 | 102 |

## Tableau 5

Cinétique d'extraction de $H_2SO_4$ par l'Alamine 308

Alamine 308 30 % + Solvesso 150 65 %

+ Isodécanol 5 %

| Temps de contact (minutes) | Rapport en Volume phase organique phase aqueuse | Temps de séparation des phases (minutes) | $H_2SO_4$ extrait g/l |
|---|---|---|---|
| 0,1 | 1 | 6 | 53 |
| 0,5 | 1 | 6 | 53 |
| 1,0 | 1 | 5 | 53 |
| 2,0 | 1 | 5 | 53 |
| 3,0 | 1 | 5 | 53 |
| 5,0 | 1 | 5 | 53 |
| 1,0 | 6 | 5 | 260 |
| 5,0 | 6 | 5 | 260 |

On peut donc conclure que le temps de contact est très bref, mais non critique.

L'Alamine 308 additionnée de nonylphénol donne une bonne extraction (54,6 g/l) mais le temps de séparation est long (7 minutes) et la légère émulsion formée dans la phase organique prend du temps à se dissiper.

Quand on a remplacé le nonylphénol par le TBP, l'extraction a été aussi bonne (53,2 g/l), le temps de séparation de phases a été court (3 minutes) mais une légère émulsion a persisté dans la phase organique.

De préférence on utilise l'isodécanol qui donne une extraction qui se situe entre celle obtenue avec l'Alamine 308 et le diluant seul (49 g/l) et celle obtenue avec les deux solvants précédents (54,6, 53,2 g/l) et un temps de séparation de phases de 5 minutes sans formation d'émulsion.

Le tableau 4 présente l'effet de la concentration de l'Alamine 308 sur l'extraction du $H_2SO_4$. La concentration de 30 % en volume est la plus indiquée parce qu'elle donne une bonne extraction de 19,1 g/l $H_2SO_4$ par 10 % en volume de solvant tout en ayant un temps de séparation pratique (5 minutes). Les concentrations supérieures à 30 % en volume augmentent la viscosité du solvant et le temps de séparation.

La cinétique d'extraction a été aussi étudiée sommairement et les résultats sont contenus dans le tableau 5. En faisant varier le temps de contact de 0,1 à 5,0 minutes, la quantité de $H_2SO_4$ extrait est la même, ce qui confirme que l'extraction de l'acide par l'amine est une réaction instantanée, mais il faut tenir compte du temps minimal pour porter les deux liquides en contact. Pour un rapport en volume phase organique/phase aqueuse égal à 6, une minute de contact est suffisante pour extraire l'acide sulfurique.

La réextraction s'effectue de préférence par NH₃-gaz, bien que d'autres bases puissent aussi être utilisées. L'acide est réextrait quantitativement du solvant sous forme de $(NH_4)_2SO_5$ solide et séparé par simple filtration. Le solvant est ensuite prêt à être réutilisé pour l'extraction de nouvelles quantités d'acide. Le grand avantage du NH₃-gaz est que le produit de la réextraction ne contient pas d'eau, ne produit pas d'eau, et ne nécessite pas d'évaporation.

En passant par la réextraction par un simple barbotage de NH₃ à travers la phase organique à pression atmosphérique, la récupération était de 100 %.

Sous pression de 3,4 bars en utilisant un autoclave revêtu d'acier inoxydable 316, la réextraction a duré (non mesurable) au maximum 3-4 minutes et le rendement fût de 100 %. Le précipité a été lavé par l'éther pour séparer le solvant retenu par le sel et ce solvant a été récupéré après l'évaporation de l'éther.

Les analyses du produit obtenu par la réextraction — $(NH_4)_2SO_4$ — sont présentées au Tableau 6. La pureté du produit est au moins comparable à celle du produit vendu dans le commerce.

### Tableau 6

### Analyses du $(NH_4)_2SO_4$

Par absorption atomique

| | |
|---|---|
| $V_2O_5$ | 0,002 % |
| Fe | 0,004 % |
| $TiO_2$ | 0,02  % |
| $Al_2O_3$ | 0,002 % |
| $Cr_2O_3$ | 0,002 % |

Spectro — semi-quantitative

| | |
|---|---|
| Na, Si | 0,005-0,05 % |
| Ca, Fe, Mg, Ti | 0,001-0,01 % |
| Al | < 0,001 % |

Ag, As, B, Ba, Be, Bi, Nb, Co, Cu, Li,   } non décelés
Mn, Mo, Ni, P, Pb, Sb, Sn, Sr, Zn, W   }

Diffraction-X
$(NH_4)_2SO_4$ avec traces de $NH_4Cl$

Le procédé selon l'invention est relativement simple, n'exigeant pas un équipement sophistiqué et onéreux. En ce qui concerne l'extration de $H_2SO_4$, on ne prévoit qu'un mélangeur-décanteur, des colonnes pour la réextraction de l'acide sulfurique sous forme de $(NH_4)_2SO_4$ et de filtres standards.

Il est à remarquer que le procédé n'a pas besoin d'énergie thermique.

Le procédé selon l'invention emploie des solvants disponibles sur le marché, à savoir les amines tertiaires macromoléculaires avec des chaînes qui contiennent 8-12 atomes de carbone, aliphatiques, linéaires ou ramifiées, saturées ou non ; ces solvants sont dilués dans un diluant organique, aromatique ou aliphatique qui contient un modificateur (alcool macromoléculaire).

Le temps d'extraction est très intéressant, étant de l'ordre de 1 minute ou moins.

Le solvant étant régénéré complètement après récupération de l'acide sulfurique, ceci permet son recyclage, ce qui est avantageux du point de vue économique. Le procédé selon l'invention respecte les normes de conservation de l'environnement. Il conduit à un produit solide et ne produit pas d'eau, ce qui évite les évaporations coûteuses. L'extraction et la récupération de l'acide ne requiert qu'un minimum d'énergie.

## Revendications

1. Procédé de récupération d'acide sulfurique à partir de liqueurs en contenant, par extraction liquide-liquide sélective desdites liqueurs, dans des conditions produisant une phase organique contenant l'acide sulfurique et une phase aqueuse contenant éventuellement des impuretés, caractérisé en ce que l'on neutralise l'acide sulfurique extrait par la phase organique par NH₃ gazeux et l'on récupère l'acide sulfurique par filtration sous forme de $(NH_4)_2 SO_4$.

2. Procédé selon la revendication 1, caractérisé en ce que lesdites liqueurs sont des solutions industrielles usées contenant de l'acide sulfurique.

3. Procédé selon la revendication 2, caractérisé en ce que les solutions industrielles usées contenant de l'acide sulfurique sont des acides usés de l'industrie des pigments de $TiO_2$.

4. Procédé selon la revendication 2, caractérisé en ce que les solutions industrielles usées contenant de l'acide sulfurique contiennent des ions métalliques.

5. Procédé selon la revendication 4, caractérisé en ce que les ions métalliques sont constitués par des ions vanadium, fer, titane, aluminium et chrome.

6. Procédé selon la revendication 1, caractérisé en ce que l'extraction liquide-liquide sélective des liqueurs s'effectue par traitement de ces dernières au moyen d'un solvant organique constitué par une amine tertiaire et un diluant organique.

7. Procédé selon la revendication 6, caractérisé en ce que le solvant organique contient aussi un modificateur ayant pour rôle de prévenir la formation d'émulsion et de faciliter la séparation des phases.

8. Procédé selon la revendication 6, caractérisé en ce que l'amine tertiaire est choisie dans le groupe constitué par les amines tertiaires macromoléculaires, à trois chaînes aliphatiques, saturées ou non, linéaires ou ramifiées et contenant 8-12 atomes de carbone par chaîne.

9. Procédé selon la revendication 8, caractérisé en ce que l'amine tertiaire est choisie dans le groupe constitué par la trilaurylamine, la trisooctylamine, la trisodécylamine et une amine tertiaire saturée à chaîne droite symétrique, dont les groupements alkyle comprennent un mélange en $C_8$ à $C_{10}$ avec prédominance de la chaîne à 8 atomes de carbone.

10. Procédé selon la revendication 6, caractérisé en ce que le diluant organique est du kérosène.

11. Procédé selon la revendication 10, caractérisé en ce que le kérosène contient un modificateur ayant pour rôle de prévenir la formation d'émulsion et de faciliter la séparation des phases.

12. Procédé selon la revendication 7, caractérisé en ce que le modificateur est choisi dans le groupe constitué par l'isodécanol, le nonylphénol et le tributyl phosphate.

13. Procédé selon la revendication 1, caractérisé en ce qu'après neutralisation de l'acide sulfurique par $NH_3$ gazeux, on recycle la phase organique afin d'extraire de nouvelles quantités d'acide sulfurique.

14. Procédé selon la revendication 1, caractérisé en ce que l'on sépare les phases aqueuse et organique par soutirement de la phase aqueuse.

15. Procédé selon la revendication 1, caractérisé en ce que l'on sépare les phases aqueuse et organique par décantation de la phase organique.

16. Procédé selon la revendication 1, caractérisé en ce que l'on fait barboter le gaz $NH_3$ dans la phase organique en quantité stœchiométrique pour la neutralisation de l'acide sulfurique présent dans cette phase et la formation de $(NH_4)_2SO_4$ solide qui est récupéré ensuite par filtration.

17. Procédé selon la revendication 1, caractérisé en ce que l'on effectue la neutralisation de l'acide sulfurique en traitant la phase organique avec le gaz $NH_3$, sous pression en vase clos.

18. Procédé selon la revendication 1, caractérisé en ce que l'extraction liquide-liquide s'effectue en une période variant entre 0,1 et 5 minutes.

19. Procédé selon la revendication 1, caractérisé en ce que l'extraction et la récupération s'effectuent à température ambiante.

20. Procédé selon la revendication 6, caractérisé en ce que le solvant organique contient 30 % en volume d'amine tertiaire et 70 % en volume de kérosène modifié avec un modificateur ayant pour rôle de prévenir la formation d'émulsion de faciliter la séparation des phases.

21. Procédé selon la revendication 6, caractérisé en ce que la concentration de l'amine dans le diluant varie entre 10 et 60 % en volume.

22. Procédé selon la revendication 7, caractérisé en ce que le modificateur est utilisé à une concentration d'environ 5 % en volume.

23. Procédé selon la revendication 1, caractérisé en ce que l'extraction liquide-liquide s'effectue à un pH inférieur au pH de précipitation des métaux présents sous forme d'ions dans la solution.

24. Procédé de récupération sélective d'acide sulfurique à partir de liqueurs contenant de l'acide sulfurique et des impuretés constituées par des ions métalliques, caractérisé en ce que l'on effectue une extraction liquide-liquide desdites liqueurs avec un solvant essentiellement constitué de triisooctylamine, de kérosène et d'isodécanol, dans des conditions susceptibles de donner une extraction liquide-liquide sélective desdites liqueurs pour produire une phase organique renfermant l'acide sulfurique extrait mais pratiquement pas d'ions métalliques, ainsi qu'une phase aqueuse renfermant pratiquement tous lesdits ions métalliques, on sépare la phase organique de la phase aqueuse, on régénère la phase organique en y introduisant du $NH_3$ gazeux dans des conditions susceptibles de produire du $(NH_4)_2SO_4$ solide, et l'on sépare le $(NH_4)_2SO_4$ solide de la phase organique de façon à régénérer le solvant organique incluant la tri-isooctylamine, le kérosène et l'isodécanol.

25. Procédé selon la revendication 24 de récupération d'acide sulfurique à partir d'acides usés de l'industrie des pigments de $TiO_2$, contenant de l'acide sulfurique et des ions métalliques vanadium, fer, titane, aluminium et chrome, caractérisé en ce que l'on mélange lesdits acides usés avec un solvant contenant 30 % en volume de triisooctylamine, 65 % en volume de kérosène et 5 % en volume d'isodécanol, pendant environ 5 minutes à la température ambiante, à un pH inférieur au pH de précipitation desdits ions, de façon à produire une séparation en une phase aqueuse contenant pratiquement tous les ions métalliques de la solution de départ, et une phase organique contenant une partie importante de l'acide sulfurique, on fait barboter du $NH_3$ gazeux en quantité stoechiométrique dans la phase organique précipitant ainsi le $(NH_4)_2SO_4$ qui est insoluble dans le solvant, et l'on sépare le $(NH_4)_2SO_4$ par filtration.

**Claims**

1. Process for the recovery of sulfuric acid from liquors containing the same, comprising carrying out

8

a selective liquid-liquid extraction of said liquors, under conditions producing an organic phase containing sulfuric acid and an aqueous phase eventually containing impurities, characterized in that the sulfuric acid extracted with the organic phase is neutralised by means of gaseous $NH_3$ and the sulfuric acid is recovered by filtration, as $(NH_4)_2SO_4$.

2. Process according to claim 1, characterized in that said liquors are waste industrial solutions containing sulfuric acid.

3. Process according to claim 2, characterized in that the waste industrial solutions containing sulfuric acid are waste acids derived from the industry of $TiO_2$ pigments.

4. Process according to claim 2, characterized in that the waste industrial solutions containing sulfuric acid also contain metal ions.

5. Process according to claim 4, characterized in that the metal ions comprise vanadium, iron, titanium, aluminum and chromium.

6. Process according to claim 1, characterized in that the selective liquid-liquid extraction of the liquors is carried out by treating the latter by means of an organic solvent consisting of a tertiary amine and an organic solvent.

7. Process according to claim 6, characterized in that the organic solvent also contains a modifier which serves to prevent the formation of an emulsion and to facilitate the separation of the phases.

8. Process according to claim 6, characterized in that the tertiary amine is selected from the group consisting of macromolecular tertiary amines having three aliphatic chains, which are saturated or unsaturated, linear or branched, and contain 8-12 carbon atoms per chain.

9. Process according to claim 8, characterized in that the tertiary amine is selected from the group consisting of trilaurylamine, trioctylamine, triisodecylamine and a symmetrical straight chain saturated tertiary amine, the alkyl groups being a $C_8$-$C_{10}$ mixture with the $C_8$ chain predominating.

10. Process according to claim 6, characterized in that the organic diluent is kerosene.

11. Process according to claim 10, characterized in that the kerosene contains a modifier which serves to prevent the formation of an emulsion and to facilitate the separation of the phases.

12. Process according to claim 7, characterized in that the modifier is selected from the group consisting of isodecanol, nonylphenol and tributylphosphate.

13. Process according to claim 1, characterized in that after stripping of the sulfuric acid with $NH_3$ gas, the organic phase is recycled in order to extract new quantities of sulfuric acid.

14. Process according to claim 1, characterized in that the aqueous and organic phases are separated by extraction of the aqueous phase.

15. Process according to claim 1, characterized in that the aqueous and organic phases are separated by decanting the organic phase.

16. Process according to claim 1, characterized in that the $NH_3$ gas is bubbled into the organic phase in a stoichiometric quantity to neutralize the sulfuric acid present in this phase and to form solid $(NH_4)_2SO_4$ which is then recovered by filtration.

17. Process according to claim 1, characterized in that the neutralisation of sulfuric acid is carried out by treating the organic phase with $NH_3$ gas, under pressure in a closed vessel.

18. Process according to claim 1, characterized in that the liquid-liquid extraction is carried out during a period of time between 0,1 and 5 minutes.

19. Process according to claim 1, characterized in that the extraction and recovery are carried out at room temperature.

20. Process according to claim 6, characterized in that the organic solvent contains 30 volume percent of tertiary amine and 70 volume percent kerosene modified with a modifier which serves to prevent the formation of an emulsion and to facilitate the separation of the phases.

21. Process according to claim 6, characterized in that the concentration of amine in the solvent varies between 10 and 60 volume percent.

22. Process according to claim 7, characterized in that the modifier is used at a concentration of about 5 volume percent.

23. Process according to claim 1, characterized in that the liquid-liquid extraction is carried out at a pH lower than the pH at which metals present in the form of ions in the solution are precipitated.

24. Process for the selective recovery of sulfuric acid from liquors containing sulfuric acid and metallic ions as impurities, characterized in that a liquid-liquid extraction of said liquors is carried out with a solvent essentially consisting of triisooctylamine, kerosene and isodecanol, in conditions liable to give a selective liquid-liquid extraction of said liquors for producing an organic phase containing extracted sulfuric acid but substantially no metallic ions, as well as an aqueous phase containing substantially all said metallic ions, the organic phase is removed from the aqueous phase, the organic phase is regenerated by introducing gaseous $NH_3$ in conditions liable to produce solid $(NH_4)_2SO_4$ and solid $(NH_4)_2SO_4$ is removed from the organic phase in order to regenerate the organic solvent comprising triicooctylamine, kerosene and isodecanol.

25. Process according to claim 24 for the recovery of sulfuric acid from waste acids derived from the $TiO_2$ pigments industry, containing sulfuric acid and vanadium, iron, titanium, aluminum and chromium as metallic ions, characterized in that said waste acids are mixed with a solvent containing 30 volume percent of triisooctylamine, 65 volume percent of kerosene and 5 volume percent of isodecanol, during

9

about 5 minutes at room temperature, at a pH lower than the pH which precipitates said ions, so as to provide a separation into an aqueous phase containing substantially all the metal ions from the original solution, and an organic phase containing an important portion of the sulfuric acid, bubbling $NH_3$ gas through said organic phase in a stoichiometric quantity to precipitate $(NH_4)_2SO_4$ which is insoluble in the solvent, and separating $(NH_4)_2SO_4$ by filtration.

## Patentansprüche

1. Verfahren zur Rückgewinnung von Schwefelsäure aus diese enthaltenden Lösungen durch selektive Flüssig/flüssig-Extraktion der genannten Lösungen unter Bedingungen, die eine die Schwefelsäure enthaltende organische Phase und eine ggf. Verunreinigungen enthaltende wäßrige Phase erzeugen, dadurch gekennzeichnet, daß man die durch die organische Phase extrahierte Schwefelsäure durch gasförmiges NH, neutralisiert und die Schwefelsäure in der Form $(NH_4)_2SO_4$ rückgewinnt.

2. Verfahren gemäß Anspruch 1, dadurch gekennzeichnet, daß es sich bei den genannten Lösungen um Schwefelsäure enthaltende, durch industrielle Prozesse anfallende, verbrauchte Lösungen handelt.

3. Verfahren gemäß Anspruch 2, dadurch gekennzeichnet, daß es sich bei den durch industrielle Prozesse anfallenden, verbrauchten, Schwefelsäure enthaltenden Lösungen um Säuren handelt, die in der $TiO_2$-Farbstoffindustrie benützt werden.

4. Verfahren gemäß Anspruch 2, dadurch gekennzeichnet, daß die Schwefelsäure enthaltenden, durch industrielle Prozesse anfallenden, verbrauchten Lösungen Metallionen enthalten.

5. Verfahren gemäß Anspruch 4, dadurch gekennzeichnet, daß es sich bei diesen Metallionen um Vanadium-, Eisen-, Titan-, Aluminium- und Chromionen handelt.

6. Verfahren gemäß Anspruch 1, dadurch gekennzeichnet, daß die selektive Flüssig/flüssig-Extraktion der Lösungen durch Behandlung dieser letzteren mittels eines organischen Lösungsmittels, das aus einem tertiären Amin und einem organischen Verdünnungsmittel besteht, bewirkt wird.

7. Verfahren gemäß Anspruch 6, dadurch gekennzeichnet, daß das organische Lösungsmittel auch einen Modifikator enthält, der die Aufgabe hat, die Emulsionsbildung zu verhindern und die Phasentrennung zu erleichtern.

8. Verfahren gemäß Anspruch 6, dadurch gekennzeichnet, daß das tertiäre Amin aus der Gruppe der makromolekularen, gesättigten oder ungesättigten, linearen oder verzweigtkettigen Amine mit drei aliphatischen Ketten mit 8-12 Kohlenstoffatomen je Kette gewählt wird.

9. Verfahren gemäß Anspruch 8, dadurch gekennzeichnet, daß das tertiäre Amin aus der Gruppe Trilaurylamin, Triisooctylamin, Triisodecylamin und einem gesättigten tertiären Amin mit symmetrischer gerader Kette gewählt wird, deren Alkylgruppen ein Gemisch aus $C_8$ bis $C_{10}$, vorwiegend mit der 8 Kohlenstoffatome enthaltenden Kette enthalten.

10. Verfahren gemäß Anspruch 6, dadurch gekennzeichnet, daß es sich bei dem organischen Verdünnungsmittel um Kerosin handelt,

11. Verfahren gemäß Anspruch 10, dadurch gekennzeichnet, daß das Kerosin einen Modifikator enthält, der die Aufgabe hat, die Emulsionsbildung zu verhindern und die Phasentrennung zu erleichtern.

12. Verfahren gemäß Anspruch 7, dadurch gekennzeichnet, daß der Modifikator aus der Gruppe Isodecanol, Nonylphenol, Tributylphosphat gewählt wird.

13. Verfahren gemäß Anspruch 1, dadurch gekennzeichnet, daß nach der Neutralisierung der Schwefelsäure durch gasförmiges NH, die organische Phase rückgeführt wird um weitere Mengen Schwefelsäure zu extrahieren.

14. Verfahren gemäß Anspruch 1, dadurch gekennzeichnet, daß man die wäßrige Phase und die organische Phase durch Abscheiden der wäßrigen Phase trennt.

15. Verfahren gemäß Anspruch 1, dadurch gekennzeichnet, daß man die wäßrige Phase und die organische Phase durch Dekantieren der organischen Phase trennt.

16. Verfahren gemäß Anspruch 1, dadurch gekennzeichnet, daß man das gasförmige NH, in stöchiometrischer Menge durch die organische Phase perlen läßt zur Neutralisierung der in dieser Phase vorhandenen Schwefelsäure unter Bildung von festem $(NH_4)_2SO_4$, das anschließend durch Ausfiltern gewonnen wird.

17. Verfahren gemäß Anspruch 1, dadurch gekennzeichnet, daß man die Neutralisierung der Schwefelsäure durch Behandeln der organischen Phase mit dem gasförmigen NH, unter Druck im abgeschlossenen Gefäß erreicht.

18. Verfahren gemäß Anspruch 1, dadurch gekennzeichnet, daß sich die Flüssig/flüssig-Extraktion während eines Zeitraums von 0,1 bis 5 Minuten abspielt.

19. Verfahren gemäß Anspruch 1, dadurch gekennzeichnet, daß sich die Extraktion und die Rückgewinnung bei Umgebungstemperatur abspielen.

20. Verfahren gemäß Anspruch 6, dadurch gekennzeichnet, daß das organische Lösungsmittel 30 Vol. % tertiäres Amin und 70 Vol. % modifiziertes Kerosin mit einem Modifikator enthält,der die Aufgabe hat, die Emulsionsbildung zu verhindern und die Phasentrennung zu erleichtern.

21. Verfahren gemäß Anspruch 6, dadurch gekennzeichnet, daß die Aminkonzentration im Verdünnungsmittel zwischen 10 und 60 Vol. % liegt.

22. Verfahren gemäß Anspruch 7, dadurch geknnzeichnet, daß der Modifikator in einer Konzentration von etwa 5 Vol.% eingesetzt wird.

23. Verfahren gemäß Anspruch 1, dadurch gekennzeichnet, daß sich die Flüssig/flüssig-Extraktion bei einem pH-Wert abspielt, der unter dem pH-Wert für das Ausfällen der in der Lösung in Ionenform enthaltenen Metalle liegt.

24. Verfahren zur selektiven Rückgewinnung von Schwefelsäure aus Lösungen, die Schwefelsäure zusammen mit Verunreinigungen bestehend aus Metallionen enthalten, dadurch gekennzeichnet, daß man eine Flüssig/flüssig-Extraktion der genannten Lösungen mit einem Lösungsmittel bewirkt, das im wesentlichen aus Triisooctylamin, Kerosin und Isodecanol besteht, unter Bedingungen, die ein selektive Flüssig/flüssig-Extraktion der genannten Lösungen bewirken um eine organische Phase, die die extrahierte Schwefelsäure, jedoch praktisch keine Metallionen enthält, sowie eine wäßrige Phase, die praktisch alle genannten Metallionen enthält, zu erzeugen, die organische von der wäßrigen Phase trennt, die organische Phase regeneriert indem man gasförmiges $NH$, unter Bedingungen einleitet, so daß festes $(NH_4)_2SO_4$ entsteht, das feste $(NH_4)_2SO_4$ von der organischen Phase abtrennt, so daß das organische Lösungsmittel einschließlich Triisooctylamin, Kerosin und Isodecanol regeneriert wird.

25. Verfahren gemäß Anspruch 24 zur Rückgewinnung von Schwefelsäure aus in der $TiO_2$-Farbindustrie anfallenden verbrauchten Säuren, die Schwefelsäure sowie Vanadium-, Eisen-, Titan-, Aluminium- und Chrom-Metallionen enthalten, dadurch gekennzeichnet, daß man die genannten verbrauchten Säuren mit einem Lösungsmittel, enthaltend 30 Vol.% Triisooctylamin, 65 Vol.% Kerosin und 5 Vol.% Isodecanol, für etwa 5 Minuten bei Umgebungstemperatur und mit einem pH-Wert, der unter dem pH-Wert für die Ausfällung der genannten Ionen liegt, versetzt, so daß man eine Trennung in eine wäßrige Phase, die praktisch alle Metallionen der Ausgangslösung enthält, und eine organische Phase, die einen großen Teil der Schwefelsäure enthält, bewirkt, man gasförmiges $NH$, in stöchiometrischer Menge durch die organische Phase perlen läßt so daß im Lösungsmittel unlösliches $(NH_4)_2SO_4$ aufällt, und man das $(NH_4)_2SO_4$ abfiltert.